# EUROPEAN PATENT SPECIFICATION

(11) **EP 3 489 189 B1**
(45) Date of publication and mention of the grant of the patent: **17.03.2021**
(21) Application number: 17203997.6
(22) Date of filing: 28.11.2017
(51) Int. Cl.: B66F 9/06, B66F 7/06

(54) **ACCESSORY MODULAR DEVICE FOR AGV**
MODULARE ZUSATZVORRICHTUNG FÜR FAHRERLOSES TRANSPORTSYSTEM (FTS)
DISPOSITIF MODULAIRE ACCESSOIRE POUR VÉHICULE À GUIDAGE AUTOMATIQUE

(43) Date of publication of application: 29.05.2019
(73) Proprietor: Comau S.p.A., 10095 Grugliasco (Torino) (IT)
(72) Inventor: GHIRARDI, Ugo, I-10095 Grugliasco (Torino) (IT); ASCHERI, Andrea, I-10095 Grugliasco (Torino) (IT); POLLANO, Maurizio, I-10095 Grugliasco (Torino) (IT)
(74) Representative: Notaro, Giancarlo

(56) References cited:
- WO-A1-2018/005304
- CN-A- 104 442 518
- CN-U- 206 203 291
- US-A- 6 045 122
- US-A- 6 109 395

## Description

### Field of the invention

The present invention relates to automatic guided vehicles (AGV) used in the industrial field, for handling products and/or components typically within a production environment. In particular, the present invention relates to an accessory modular device designed to be mounted on board various types of AGV, for example, to facilitate loading onto, and unloading from, the AGV itself and/or to facilitate assembly operations that an operator must perform on the components transported by the AGV itself.

Document CN 104 442 518 A discloses an accessory device according to the preamble of claim 1. WO 2018005304 A1, which is prior art according to Article 54(3) EPC discloses the features of the preamble of claim 1 as well as the further features of an upper platform in the shape of an inverted omega and an accessory arranged at the central portion thereof to further facilitate movement of a pallet.

### Object of the invention

The object of the present invention is to produce an accessory device for an AGV of the type indicated above, which can be easily implemented on different types of AGV and, at the same time, has a relatively simple and economical structure to produce.

A further object of the present invention is to produce an accessory device of the type indicated above, which has low overall dimensions and that can be adapted according to the operators interacting with the aforesaid device, depending on the production environment in which the AGV is intended to operate and depending on the types of components transported by the AGV.

### Summary of the invention

In view of achieving the aforesaid objects, the present invention relates to an accessory device for an AGV comprising the features indicated in claim 1.

Thanks to these characteristics, the accessory device according to the invention is able to implement a series of important advantages. Firstly, the adoption of a height-adjustable upper platform facilitates the interaction of an operator with the object transported by the AGV, for example, allowing an operator to perform assembly operations on the component transported by the AGV in ergonomic positions. Furthermore, thanks to the upper platform shaped like an inverted omega and therefore having a central portion lying in a plane that is lowered with respect to its end portions, it is possible to have a vertical dimension relatively contained. Finally, the omega shape of the upper platform makes it possible to arrange, within its central portion, useful accessories to further facilitate handling of the objects transported by the AGV and by the device.

According to a first preferred characteristic of the invention, the lifting units have a pantograph structure having a base portion arranged to be fixed above the base surface of the AGV, and a vertically movable upper portion. The base portion is substantially shaped like a rectangle and is fixed transversely above the base surface relative to the longitudinal direction of the AGV. Thanks to this characteristic, it is possible to limit the size of the accessory device, restricted to the dimensions of the upper plane of the AGV.

The device also comprises an accessory for further facilitating the movement of the object transported by the AGV. The accessory is arranged at the central portion of the upper platform.

According to the invention, the accessory is either a roller conveyor equipped with an electric motor or a motorized revolving table, and the lifting units are movable with a nut screw mechanism operated by means of a single electric motor which, with a transmission belt, moves the lifting units synchronously in the aforesaid vertical direction.

The motorized revolving table is arranged at the central portion of the upper platform, and a roller conveyor is arranged above the motorized revolving table.

### Description of a preferred embodiment

Further characteristics and advantages of the invention will become apparent from the description that follows with reference to the attached drawings, provided purely by way of non-limiting example, wherein:
- Figure 1 is a schematic side view of an AGV with an associated accessory device according to the invention;
- Figure 2 shows an exploded schematic view of the elements illustrated in the previous figure;
- Figures 3A-3B are two additional schematic side views of the device according to the invention, in its lowered condition and in its raised condition, respectively;
- Figures 4A-4B illustrate two perspective views of the accessory device of the preceding figures;
- Figures 5A-5B illustrate, in detail, two perspective views of a lifting unit forming part of the device illustrated in the previous figures; and
- Figures 6A-6B illustrate two further perspective views of the device of the preceding figures in its raised condition.

In the following description, various specific details are illustrated aimed at a thorough understanding of the embodiments. The embodiments can be implemented without one or more of the specific details, or with other methods, components, materials, etc. In other cases, known structures, constructive details, materials or operations are not illustrated and described in detail, since they can be produced in any known way, and also because they do not fall, taken in their own right, within the scope of the present invention .

It is also understood that in the following description, only the elements useful for understanding the invention are described, for example, assuming that the AGV on which the accessory devices are implemented according to the invention, comprises all the elements known per se for operation.

In the attached drawings, reference 1 indicates, in its entirety, a preferred embodiment of an accessory modular device according to the present invention for an AGV A. As known for some time, the term AGV means an automatic guided vehicle used mainly in the industrial field for handling products within a production environment, such as a production line.

The accessory device 1 according to the invention is configured to be mounted on board the AGV A, for example, to facilitate loading onto, and unloading from, said AGV, of an object transported by the AGV itself.

The AGV A has a base surface 3, on which both the accessory device 1, and an object to be handled within the production environment in which the AGV operates, can be mounted.

The AGV A illustrated in the drawings is provided herein purely by way of example, and it is evident that it can have any known configuration, different from that illustrated. Furthermore, the details relating to the technology with which the AGV operates within the production environment are not presented here because they are beyond the specific characteristics of the invention. The device according to the present invention is applicable to different types of AGV and is powered by AGV batteries. The device according to the invention can be used in different types of production environments such as, for example, a "stop-and-go" or a "continuously moving" production line.

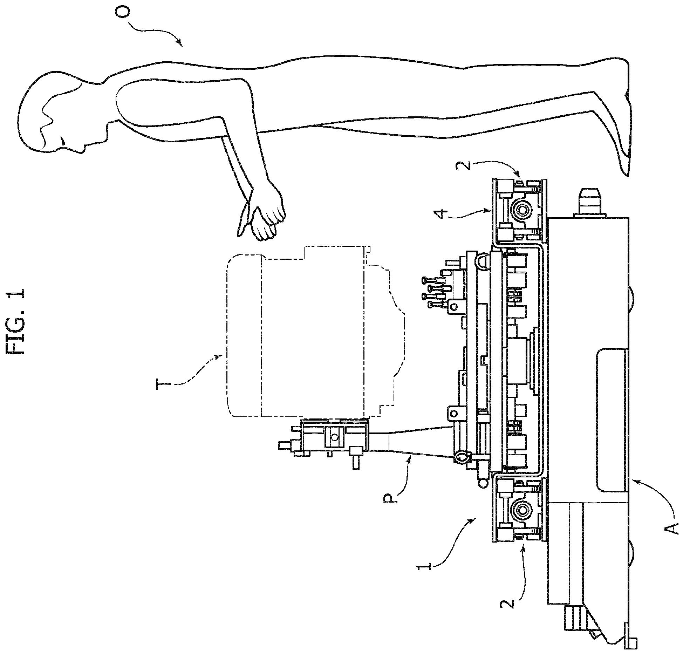

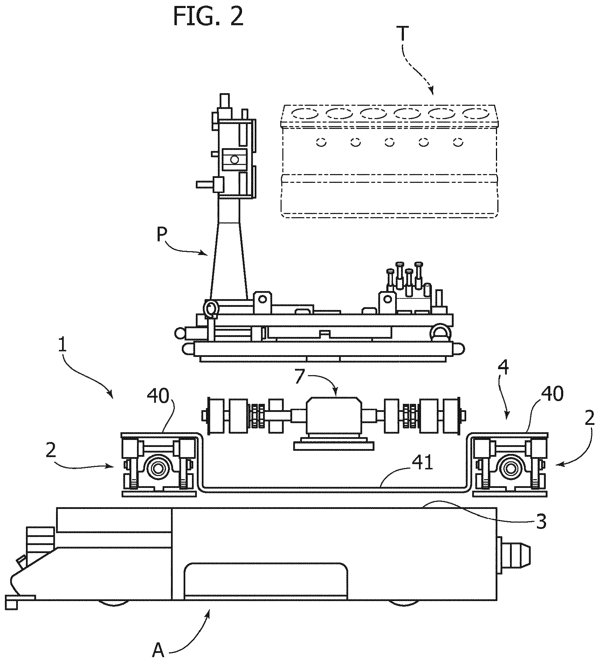

In the illustrated embodiment, with reference in particular to Figures 1 and 2, the AGV A, and the accessory device 1 associated with the AGV A, transport a pallet P. The pallet P is arranged, in turn, to carry a component (for example a cylinder head T). Typically, an operator O must manually perform assembly operations, and/or with the aid of electromechanical systems, on the components transported by the pallets P. Of course, the pallet P as depicted herein is also given by way of example, since the accessory device 1 can also be associated with other types of objects that are different from those illustrated.

With reference, in particular, to the exploded view of Figure 2, the accessory device 1 according to the invention comprises two lifting units 2, arranged to be fixed above the base surface 3 of the AGV A. The lifting units 2 are operative in a vertical direction by the actuation of an electric motor M powered by means of the AGV batteries on which the device is applied.

The accessory modular device 1 according to the invention also comprises an upper platform 4 arranged above the lifting units 2. The upper platform 4 has two end portions 40, each of which is rigidly connected above a respective lifting unit 2, in such a way that the upper platform 4 can be raised or lowered by the lifting units 2.

According to an important characteristic of the present invention, the upper platform 4 is substantially shaped as an inverted omega, so that it has a central portion 41 that lies in a lowered plane with respect to its end portions 40 arranged above the lifting units 2 (Figure 2).

Thanks to the characteristics of the device 1 according to the invention indicated above, the pallet P arranged at the central portion 41 of the upper platform 4 can be adjusted in a vertical direction. This characteristic makes it easier to load the transported parts onto, and unload from the AGV itself and/or to facilitate assembly operations that an operator must perform on the components transported by the AGV itself. A further advantage deriving from the above described structure of the device 1 is that of being able to adjust the height from the ground of the cylinder head T associated with the pallet P, in order to allow an operator O to perform machining and/or assembly operations in ergonomic positions. Furthermore, thanks to the inverted omega shape of the upper platform 4, the height from the ground of the pallet P is reduced compared to platforms with a substantially rectilinear profile, since the provision of a lowered central portion with respect to the end portions, mounted on the lifting units, allows limitation of the height due to implementing the device 1 on the base surface 3 of the AGV A.

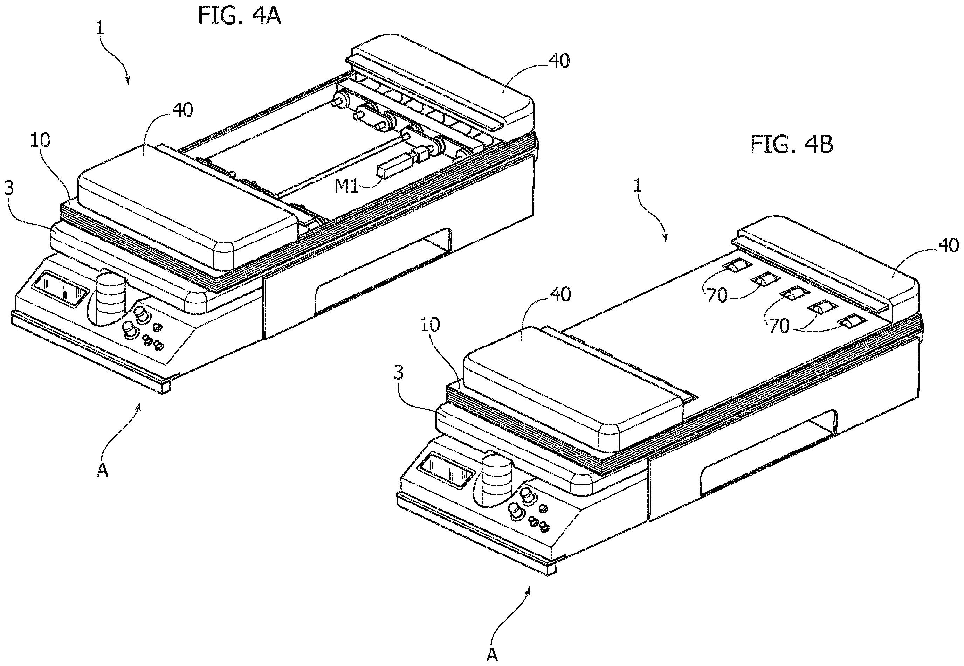

According to the invention, the accessory device 1 also comprises an accessory 7 (Figures 2 and 4A) to further facilitate the movement of the pallet P transported by the AGV A.

The accessory 7 is configured to be mounted at the central portion 41 of the upper platform 4. The omega shape of the upper platform 4 therefore has the additional advantage of allowing the arrangement of different types of accessories 7 at its central portion 41.

The distance between the two end portions 40 can be modified to position different sized accessories 7, pallets and components carried by the pallet.

With reference, in particular, to Figures 4A and 4B, the accessory 7 is a roller conveyor equipped with an electric motor, but it can also be implemented in other embodiments (for example, a motorized revolving table). The roller conveyor 7 has a plurality of rollers 70 made for the object of further facilitating the loading onto, and unloading from, the AGV A of the pallet (Figure 4B).

According to an alternative embodiment (not illustrated in the drawings), the accessory 7 mounted at the central portion 41 of the upper platform 4 consists of a motorized revolving table arranged at the central portion 41 of the upper platform 4, and of a roller conveyor arranged above the motorized revolving table. In this configuration, the height from the ground of the plane on which the pallet is arranged is greater than in the embodiments in which the accessory 7 consists of just a roller conveyor or a revolving table, but in these cases the pallet is able to rotate freely above the platform 4 with an inverted omega shape comprising the two lifting units.

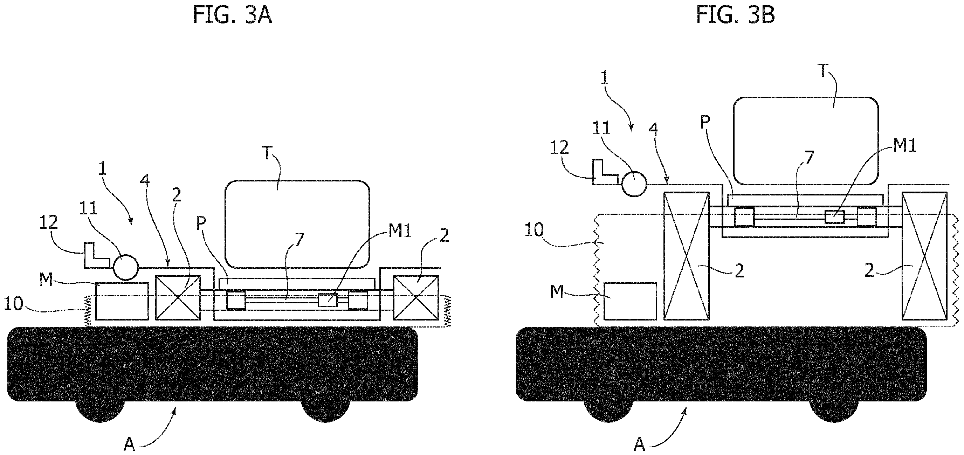

Figures 3A and 3B illustrate two schematic side views of the accessory device 1 in its lowered condition and in its raised condition, respectively. The accessory device 1 comprises a bellows 10 having the function of covering the outside of the lifting units 2 and the electric motor M that feeds them. At the upper platform 4, there is also an electronic device 11 for detecting the position of the accessory device 1 associated with the AGV A, and an HMI interface 12 comprising a display and a manually controlled pushbutton panel, with which an operator O can interact.

According to an important characteristic of the invention, the accessory modular device 1 comprises a configurable electronic control unit for automatically operating the lifting units 2 and the accessory 7 according to a predetermined program. The electronic unit of the device 1 can be configured to communicate with an electronic unit of the AGV A.

Alternatively, the lifting units and the accessory 7 can be operated manually by an operator O by means of the aforesaid manually controlled pushbutton panel.

The device 1 also comprises a programmable electronic safety controller, configured for communicating with the AGV electronic unit, in order to automatically manage a series of safety functions required according to the specific application in which the accessory device 1 and the AGV A operate (for example, the automatic stop of the vertical movement of the lifting units).

As previously mentioned, the device 1 can be interfaced with different types of AGV. The electric motors M, M1 are powered by means of the batteries of the AGV A to actuate the lifting units and/or the accessory 7.

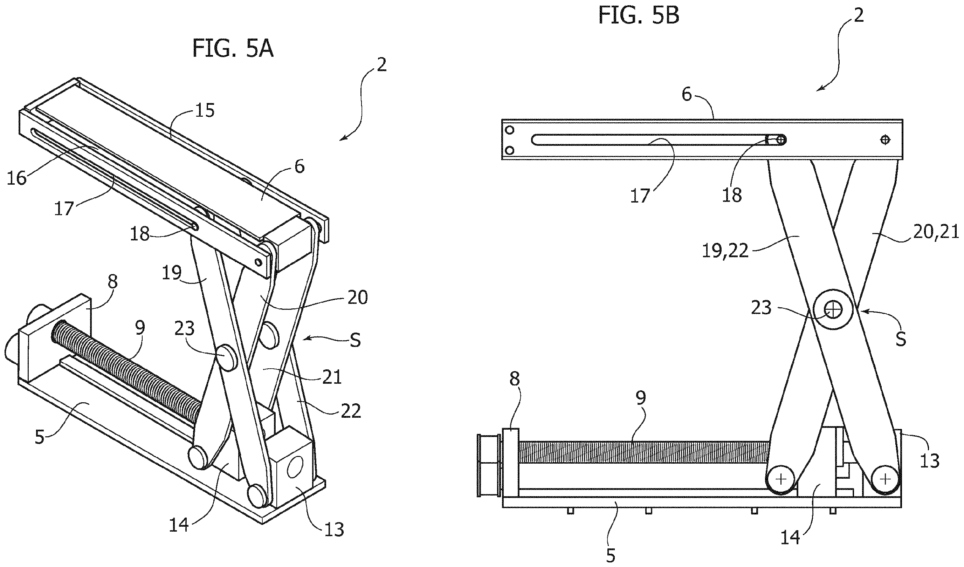

Again, with reference to the example illustrated in Figures 3A-3B, the end portions 40 of the platform 4 have different widths. Indeed, the end portion 40 with a greater width is arranged above the respective lifting unit 2 with which the electric motor M is associated, configured to synchronously move both lifting units 2. Moreover, the electronic control unit mentioned above is also provided at the end portion 40 with a greater width. With reference, in particular, to Figures 5A-6B, the structure and operation of the lifting units 2 will now be described in detail.

According to the preferred embodiment illustrated in the drawings, each lifting unit 2 has a base portion 5 mounted above the base surface 3 of the AGV A. The base portions 5 of the lifting units 2 have a substantially rectangular shape and are transversely fixed above the base surface 3 with respect to the longitudinal direction of the AGV A. Each lifting unit 2 comprises a screw 9 mounted in a freely rotatable manner between two support elements 8, 13, each mounted at a respective end of the base element 5. The base portion 5 further comprises a nut 14 engaged with the screw 9. The nut 14 is slidably mounted on the base portion 5 and is free to move along the base portion 5 and not to rotate when the screw 9 is rotated. As will become clearer below, the screws 9 of the units 2 are synchronously driven by the electric motor M, by means of a transmission belt 24.

Each of the lifting units 2 further comprises a pantograph structure S and a vertically movable upper portion 6. The upper portion 6 has substantially the same shape and dimension as the base portion 5. The pantograph structure S is configured to lower or raise the upper portion 6 when the electric motor M drives the screw 9, which causes the axial displacement of the nut 14. The pantograph structure S consists of two pairs of rods (indicated by the references 19, 20 and 21, 22), which are mounted parallel to each other relative to the longitudinal direction of the base portion 5. As illustrated in Figure 5A, each pair of rods has the two rods connected to each other by means of a pin 23 arranged at their centerline, and they have an X-shaped configuration when the upper portion 6 is in its raised position. Each pair of rods of the pantograph structure S consists of a first rod 19, 22 and a second rod 20, 21. The rods 19, 22 have a lower end rigidly connected to the support element 13 and an upper end slidably engaged in a slot 16 formed on the upper portion 6. The rods 20, 21 have their lower end rigidly connected to the nut 14 and their upper end rigidly connected to an end 60 of the upper portion 6. The upper ends of the rods 19, 22 each have a pin 18 slidably engaged in a second slot 17.

The lifting units 2 are movable in the vertical direction by means of a single electric motor M, which actuates the nut screw mechanism described above.

According to a specific embodiment, the mechanism can also be implemented by means of a recirculating ball screw. Both screws 9 of the lifting units 2 are actuated by means of a transmission belt 24. Following rotation of the screw 9, the nut 14 moves axially along the base portion 5. Movement of the nut 14 causes displacement of the rods 20, 22 which, in turn, cause the upper platform 6 to be lowered or raised. Following lowering or lifting of the upper portion 6, the pins 18 of the rods 19, 22 slide into the slots 17 provided on the upper platform 6, and the rods 19, 22 are also free to move towards the raised or lowered condition.

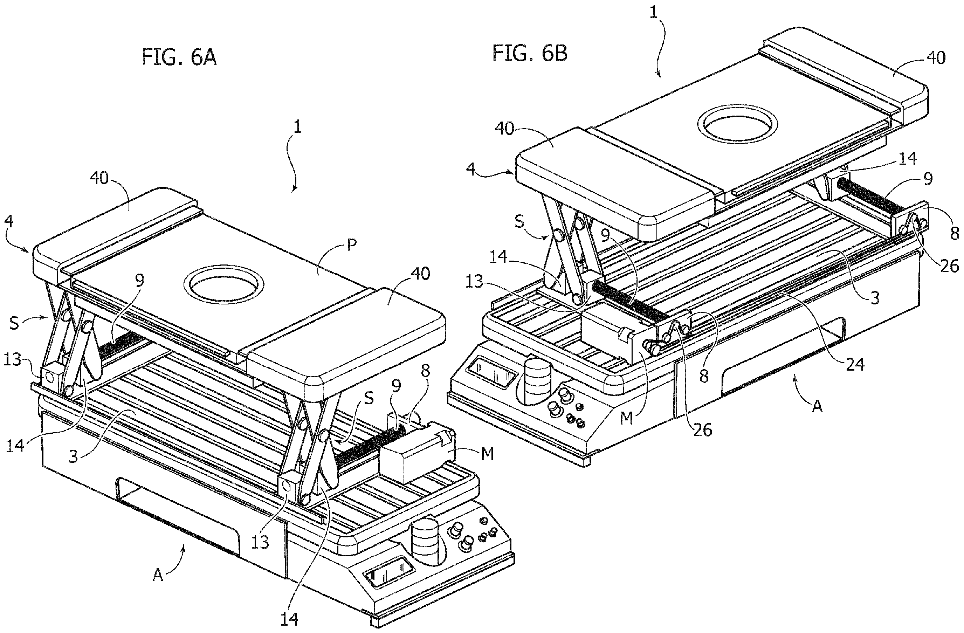

As illustrated in Figure 6B, a belt 24 is engaged at the outlet of the electric motor M, and at each of the lifting units, by means of a plurality of pulleys 26 arranged at each support element 8.

As is evident from the foregoing description, the accessory device according to the invention achieves a series of important advantages.

First of all, the accessory modular device makes it possible to move an object transported by the AGV in a vertical direction, by means of a relatively simple structure that is easily adaptable on different types of AGV.

Secondly, the provision of an upper platform 4 substantially shaped like an omega, allows the central portion to be lower with respect to the end portions, and this allows obtainment of a relatively reduced height from the ground of the objects transported by the AGV, and also to have a seat (central portion of the upper platform 4) to accommodate an additional accessory configured to further facilitate handling of the objects transported by the device and the AGV.

A further advantage of the present invention is that of being able to automatically or manually adapt the height of the object transported by the AGV so that an operator can interact with said object in ergonomic positions. The lifting units 2 can also be automatically activated during an operative moving step of the AGV A.

Finally, the present invention is applicable to different types of AGV and can be used in different types of production environments such as, for example, a "stop-and-go" or a "continuously moving" production line.

## Claims

1. An accessory device (1) for an AGV (A), configured to be mounted on board said AGV (A), for example, to facilitate loading onto, and unloading from, said AGV (A), of an object transported by said AGV (A), in particular, a pallet (P), said accessory device (1) comprising:
- two lifting units (2) arranged to be mounted above a base surface (3) of said AGV (A), said lifting units (2) being operative in a substantially vertical direction by the actuation of at least one first electric motor (M);
- an upper platform (4) arranged above said lifting units (2) and having end portions (40) rigidly connected above said lifting units (2), in such a way that that said upper platform (4) can be raised or lowered by said lifting units (2);
- **characterized in that** said upper platform (4) is substantially shaped like an inverted omega, so that it has a central portion (41) lying in a plane that is lowered with respect to its end portions (40), arranged above said lifting units (2),
- wherein said accessory device (1) comprises an accessory (7) to further facilitate the movement of said pallet (P), said accessory (7) being arranged at the central portion (41) of said upper platform (4) of the device (1),
- said accessory (7) is a motorized revolving table and/or a roller conveyor having a plurality of rollers (70), said roller conveyor being arranged to facilitate loading onto, and unloading from, said AGV (A), of said pallet (P).

2. An accessory device (1) according to claim 1, **characterized in that** each of said lifting units (2) has a pantograph structure (S), which has a base portion (5) fixed above said base surface (3) of said AGV (A) and a vertically-movable upper portion (6), said base portion (5) having a substantially rectangular shape and being transversely fixed above said base surface (3) with respect to the longitudinal direction of said AGV (A).

3. An accessory device (1) according to claim 1, **characterized in that** said roller conveyor is provided with at least one second electric motor (M1) to automate the actuation of said rollers (70).

4. An accessory device (1) according to claim 2, **characterized in that** each of said lifting units (2) is movable in a vertical direction with a nut screw mechanism (9, 14) operated by said electric motor (M) which, by means of a transmission belt (24), causes said lifting units (2) to move synchronously in the aforementioned vertical direction.

5. An accessory device (1) according to claim 4, **characterized in that** said pantograph structure (S) consists of two pairs of rods each comprising a first rod (19, 22) and a second rod (20, 21), wherein said first rod (19, 22) has a lower end rigidly connected to a support element (13) and an upper end slidably engaged in a slot (16) formed on the upper portion (6) of said pantograph structure (S), and wherein said second rod (20, 21) has a lower end rigidly connected to a nut (14) and an upper end rigidly connected to an end (60) of said upper portion (6) of said pantograph structure (S).

6. An accessory device (1) according to claim 1, **characterized in that** it also comprises a configurable electronic control unit for automatically actuating said lifting units (2) according to a predetermined program.

7. An accessory device (1) according to claim 1, **characterized in that** it also comprises a safety electronic controller configurable for automatically managing a plurality of safety functions, in particular, automatically stopping the lifting units (2).

## Patentansprüche

1. Zusatzvorrichtung (1) für ein FTF (A), die dazu eingerichtet ist, an Bord des FTF (A) angebracht zu werden, um beispielsweise das Be- und Entladen eines Objektes, insbesondere einer Palette (P), die von dem FTF (A) transportiert wird, auf das und von dem FTF (A) zu erleichtern, wobei die Zusatzvorrichtung (1) umfasst:
- zwei Hebeeinheiten (2), die dazu eingerichtet sind, über einer Grundfläche (3) des FTF (A) angebracht zu werden, wobei die Hebeeinheiten (2) durch Betätigung wenigstens eines ersten Elektromotors (M) in einer im wesentlichen vertikalen Richtung arbeiten;
- eine obere Plattform (4), die über den Hebeeinheiten (2) angeordnet ist und Endabschnitte (40) aufweist, die fest über den Hebeeinheiten (2) angeschlossen sind, so dass die obere Plattform (4) durch die Hebeeinheiten (2) angehoben oder abgesenkt werden kann;
- **dadurch gekennzeichnet, dass**
die obere Plattform (4) im wesentlichen wie ein umgekehrtes Omega ausgebildet ist, so dass sie einen zentralen Abschnitt (41) aufweist, der in einer Ebene liegt, die in Bezug auf ihre Endabschnitte (40) abgesenkt ist, die über den Hebeeinheiten (2) angeordnet sind;
- wobei die Zusatzvorrichtung (1) ein Zusatzteil (7) umfasst, um die Bewegung der Palette (P) weiter zu erleichtern, wobei das Zusatzteil (7) an dem zentralen Abschnitt (41) der oberen Plattform (4) der Vorrichtung (1) angeordnet ist,
- wobei das Zusatzteil (7) ein motorisierter Drehtisch und/oder ein Rollenförderer mit mehreren Rollen (70) ist, wobei der Rollenförderer so angeordnet ist, dass er das Be- und Entladen des FTF (A) der Palette (P) erleichtert.

2. Zusatzvorrichtung (1) nach Anspruch 1, **dadurch gekennzeichnet, dass** jede der Hebeeinheiten (2) eine Pantographkonstruktion (S) hat, die einen Basisabschnitt (5), der über der Basisfläche (3) des FTS (A) befestigt ist, und einen vertikal beweglichen oberen Abschnitt (6) aufweist, wobei der Basisabschnitt (5) eine im wesentlichen rechteckige Form aufweist und quer über der Basisfläche (3) in Bezug auf die Längsrichtung des FTS (A) fixiert ist.

3. Zusatzvorrichtung (1) nach Anspruch 1, **dadurch gekennzeichnet, dass** der Rollenförderer mit wenigstens einem zweiten Elektromotor (M1) versehen ist, um die Betätigung der Rollen (70) zu automatisieren.

4. Zusatzvorrichtung (1) nach Anspruch 2, **dadurch gekennzeichnet, dass** jede der Hebeeinheiten (2) in vertikaler Richtung mit einem von dem Elektromotor (M) betätigten Mutternschraubenmechanismus (9, 14) beweglich ist, der mittels eines Transmissionsriemens (24) bewirkt, dass sich die Hebeeinheiten (2) synchron in die oben genannte vertikale Richtung bewegen.

5. Zusatzvorrichtung (1) nach Anspruch 4, **dadurch gekennzeichnet, dass** die Pantographkonstruktion (S) aus zwei Stangenpaaren besteht, die jeweils eine erste Stange (19, 22) und eine zweite Stange (20, 21) umfassen, wobei die erste Stange (19, 22) ein unteres Ende, das starr mit einem Stützelement (13) verbunden ist, und ein oberes Ende hat, das verschiebbar in einen Schlitz (16) eingreift, der an dem oberen Abschnitt (6) der Pantographkonstruktion (S) ausgebildet ist, und die zweite Stange (20, 21) ein unteres Ende, das fest mit einer Mutter (14) verbunden ist, und ein oberes Ende hat, das fest mit einem Ende (60) des oberen Abschnitts (6) der Pantographkonstruktion (S) verbunden ist.

6. Zusatzvorrichtung (1) nach Anspruch 1, **dadurch gekennzeichnet, dass** sie auch eine konfigurierbare elektronische Steuereinheit zum automatischen Betätigen der Hebeeinheiten (2) gemäß einem vorbestimmten Programm umfasst.

7. Zusatzvorrichtung (1) nach Anspruch 1, **dadurch gekennzeichnet, dass** sie auch eine elektronische Sicherheitssteuerung umfasst, die zum automatischen Verwalten mehrerer Sicherheitsfunktionen, insbesondere zum automatischen Anhalten der Hebeeinheiten (2) eingerichtet ist.

## Revendications

1. Dispositif d'accessoire (1) pour un véhicule à guidage automatique, VGA (A), configuré pour être monté à bord dudit VGA (A), par exemple, pour faciliter le chargement dans ledit VGA (A) et le déchargement depuis celui-ci, d'un objet transporté par ledit VGA (A), en particulier, d'une palette (P), ledit dispositif d'accessoire (1) comprenant :
- deux unités de levage (2) agencées pour être montées au-dessus d'une surface de base (3) dudit VGA (A), lesdites unités de levage (2) fonctionnant dans une direction sensiblement verticale par l'actionnement d'au moins un premier moteur électrique (M) ;
- une plate-forme supérieure (4) agencée au-dessus desdites unités de levage (2) et ayant des parties d'extrémité (40) reliées rigidement au-dessus desdites unités de levage (2), de telle manière que ladite plate-forme supérieure (4) puisse être soulevée ou abaissée par lesdites unités de levage (2) ;
**caractérisé en ce que**
ladite plate-forme supérieure (4) a sensiblement la forme d'un oméga inversé, de sorte qu'elle présente une partie centrale (41) située dans un plan qui est abaissé par rapport à ses parties d'extrémité (40), agencée au-dessus desdites unités de levage (2),
- où ledit dispositif d'accessoire (1) comprend un accessoire (7) pour faciliter encore le déplacement de ladite palette (P), ledit accessoire (7) étant agencé au niveau de la partie centrale (41) de ladite plate-forme supérieure (4) du dispositif (1),
ledit accessoire (7) est une table tournante motorisée et/ou un convoyeur à rouleaux ayant une pluralité de rouleaux (70), ledit convoyeur à rouleaux étant agencé pour faciliter le chargement dans ledit VGA (A) et le déchargement depuis celui-ci, de ladite palette (P).

2. Dispositif d'accessoire (1) selon la revendication 1, **caractérisé en ce que** chacune desdites unités de levage (2) a une structure de pantographe (S), qui présente une partie de base (5) fixée au-dessus de ladite surface de base (3) dudit VGA (A) et une partie supérieure (6) mobile verticalement, ladite partie de base (5) ayant une forme sensiblement rectangulaire et étant fixée transversalement au-dessus de ladite surface de base (3) par rapport à la direction longitudinale dudit VGA (A).

3. Dispositif d'accessoire (1) selon la revendication 1, **caractérisé en ce que** ledit convoyeur à rouleaux est doté d'au moins un deuxième moteur électrique (M1) pour automatiser l'actionnement desdits rouleaux (70).

4. Dispositif d'accessoire (1) selon la revendication 2, **caractérisé en ce que** chacune desdites unités de levage (2) est mobile dans une direction verticale par un mécanisme à vis/écrou (9, 14) actionné par ledit moteur électrique (M) qui, au moyen d'une courroie de transmission (24), amène lesdites unités de levage (2) à se déplacer de manière synchrone dans la direction verticale susmentionnée.

5. Dispositif d'accessoire (1) selon la revendication 4, caractérisé en
en ce que ladite structure de pantographe (S) est constituée de deux paires de tiges comprenant chacune une première tige (19, 22) et une deuxième tige (20, 21), où ladite première tige (19, 22) a une extrémité inférieure reliée rigidement à un élément de support (13) et une extrémité supérieure engagée de manière coulissante dans une fente (16) formée sur la partie supérieure (6) de ladite structure de pantographe (S), et où ladite deuxième tige (20, 21) a une extrémité inférieure reliée rigidement à un écrou (14) et une extrémité supérieure reliée rigidement à une extrémité (60) de ladite partie supérieure (6) de ladite structure de pantographe (S).

6. Dispositif d'accessoire (1) selon la revendication 1, **caractérisé en ce qu'**il comprend également une unité de commande électronique configurable pour actionner automatiquement lesdites unités de levage (2) selon un programme prédéterminé.

7. Dispositif d'accessoire (1) selon la revendication 1, **caractérisé en ce qu'**il comprend également un dispositif de commande électronique de sécurité configurable pour gérer automatiquement une pluralité de fonctions de sécurité, notamment l'arrêt automatique des unités de levage (2).
